# EUROPÄISCHE PATENTSCHRIFT

(11) **EP 2 721 685 B1**
(45) Veröffentlichungstag und Bekanntmachung des Hinweises auf die Patenterteilung: **04.07.2018**
(21) Anmeldenummer: 12716020.8
(22) Anmeldetag: 23.04.2012
(51) Int. Cl.: H01M 10/48, H01M 10/42, H02J 7/00, B60L 11/18

(54) **BATTERIESYSTEM UND VERFAHREN ZUM BEREITSTELLEN EINER ZWISCHENSPANNUNG**
BATTERY SYSTEM AND METHOD FOR PROVIDING AN INTERMEDIATE VOLTAGE
SYSTÈME D'ACCUMULATEURS ET PROCÉDÉ DE FOURNITURE D'UNE TENSION INTERMÉDIAIRE

(30) Priorität: 17.06.2011 DE 102011077708
(43) Veröffentlichungstag der Anmeldung: 23.04.2014
(73) Patentinhaber: Robert Bosch GmbH, 70442 Stuttgart (DE)
(72) Erfinder: TIEFENBACH, Andy, 71665 Vaihingen-Horrheim (DE)
(86) Internationale Anmeldenummer: PCT/EP2012/057374
(87) Internationale Veröffentlichungsnummer: WO 2012/171686

(56) Entgegenhaltungen:
- US-A1- 2003 071 523
- US-A1- 2008 211 459

## Beschreibung

Die Erfindung betrifft ein Batteriesystem und ein Verfahren zum Bereitstellen einer Zwischenspannung, insbesondere in Traktionsbatterien für Elektrofahrzeuge.

### Stand der Technik

Elektrische Energiequellen, insbesondere mobile elektrische Energiequellen, beispielsweise Traktionsbatterien für elektrisch betriebene Fahrzeuge, umfassen häufig wiederaufladbare Energiespeicher, beispielsweise Lithium-Ionen-Akkumulatoren, welche eine Ausgangsspannung von mehr als 12 Volt bereitstellen. Zur Steuerung und Überwachung des Energiespeichers werden Steuergeräte eingesetzt, welche üblicherweise eine Versorgungsspannung benötigen, die niedriger als die durch den Energiespeicher bereitgestellte Hochspannung ist, beispielsweise genau 12 Volt. Diese Niederspannung oder auch Bordnetzspannung kann von einer zweiten Batterie, beispielsweise einer Bleisäurebatterie bereitgestellt oder mittels einer Gleichspannungswandlung aus der Hochspannung des Energiespeichers generiert werden.

Energiespeicher für Elektrofahrzeuge bestehen häufig aus einer Reihenschaltung von gegebenenfalls parallel geschalteten Einzelzellen, welche eine geringe Eigenspannung aufweisen. Durch die Serienschaltung der Einzelzellen kann eine Summenspannung aus den geringen Eigenspannungen erzeugt werden, welche im Bereich von mehreren hundert Volt für die Bereitstellung der Hochspannung, beispielsweise der Traktionsspannung dienen kann.

Da Einzelzellen eines Energiespeichers fertigungsbedingte Streuungen der Leistungsparameter aufweisen, werden die einzelnen Batteriezellen unterschiedlich stark beansprucht bzw. weisen nach einer bestimmten Betriebsdauer des Energiespeichers trotz gleichen Anfangsladezustands unterschiedliche Ladezustände auf. Da die Batteriezellen mit dem schwächsten Ladezustand die Leistungsfähigkeit eines in Serienschaltung aufgebauten Energiespeichers maßgeblich beeinflussen, werden Verfahren eingesetzt, die ein sogenanntes "cell balancing", das heißt einen Ausgleich der Ladezustände der einzelnen Batteriezellen sicherstellen können. Insbesondere bei Lithium-Ionen-Akkumulatoren kann so die Leistungsfähigkeit, Lebensdauer und Effizienz des gesamten Energiespeichers verbessert werden. Mit aktiven Verfahren kann kapazitiv oder induktiv Ladung von höher geladenen Batteriezellen auf Batteriezellen mit schwächerem Ladezustand verschoben werden. Passive Verfahren entladen selektiv einzelne Batteriezellen teilweise, in Abhängigkeit von ihrem relativen Ladezustand.

Aus der Druckschrift WO 2007/128876 A1 ist ein Verfahren zum Zellzustandsausgleich in einem Batteriesystem mit in Reihe geschalteten Batteriezellen bekannt, bei dem schwächeren Batteriezellen selektiv Energie aus zellindividuellen Ladegeräten zugeführt wird, um den Ladezustand aller Batteriezellen anzugleichen.

Das Dokument US 2008/211459 A1 offenbart ein Batteriemanagementsystem, wobei mittels des Batteriemanagementsystems Einzelzellen einer Batterie hinsichtlich einer an den Einzelzellen anliegenden Spannung überwacht werden. In Abhängigkeit der anliegenden Spannungen werden die Spannungen, die an den einzelnen Batteriezellen anliegen ausgeglichen. Zu diesem Zweck werden Zellen mit zu hoher Spannung entladen und Zellen mit zu niedriger Spannung geladen.

Das Dokument US 2003/071523 A1 offenbart eine Batterieanordnung, bei der eine Mehrzahl von individuellen Batteriezellen durch Schalter miteinander verbunden sind. Dabei können Batteriezellen in beliebigen Konfigurationen zusammengeschaltet werden.

### Offenbarung der Erfindung

Die vorliegende Erfindung schafft ein Batteriesystem mit einem Batteriemodul, welches einen ersten Hochspannungsanschluss, einen zweiten Hochspannungsanschluss und eine Vielzahl von zwischen den ersten und zweiten Hochspannungsanschluss in Reihe geschalteten Batteriezellmodulen umfasst, und einer Schaltmatrix, welche eine Vielzahl von Schaltschienen, welche jeweils mit einem der Knotenpunkte zwischen je zwei der in Reihe geschalteten Batteriezellmodule verbunden sind, eine Vielzahl von ersten Schalteinrichtungen, welche dazu ausgelegt sind, je eine der Schaltschienen mit einem ersten Niederspannungsanschluss der Schaltmatrix zu verbinden, und eine Vielzahl von zweiten Schalteinrichtungen, welche dazu ausgelegt sind, je eine der Schaltschienen mit einem zweiten Niederspannungsanschluss der Schaltmatrix zu verbinden, umfasst, wobei zwischen dem ersten und dem zweiten Hochspannungsanschluss eine erste Summenspannung aller in Reihe geschalteter Batteriezellmodule anliegt, und wobei zwischen dem ersten und dem zweiten Niederspannungsanschluss eine zweite Summenspannung eines Teils der in Reihe geschalteten Batteriezellmodule in Abhängigkeit vom Schaltzustand der ersten und zweiten Schalteinrichtungen abgreifbar ist, wobei die Schaltmatrix (13) weiterhin umfasst: eine Vielzahl von dritten Schalteinrichtungen (15c), welche dazu ausgelegt sind, je eine der Schaltschienen (14) mit einem ersten Zwischenanschluss der Schaltmatrix (13) zu verbinden, und eine Vielzahl von vierten Schalteinrichtungen (15d), welche dazu ausgelegt sind, je eine der Schaltschienen (14) mit einem zweiten Zwischenanschluss der Schaltmatrix (13) zu verbinden, wobei zwischen dem ersten Niederspannungsanschluss (13a) und dem ersten Zwischenanschluss eine dritte Summenspannung eines Teils der in Reihe geschalteten Batteriezellmodule (11 a, ..., 11 n) in Abhängigkeit vom Schaltzustand der ersten (15a) und dritten Schalteinrichtungen (15c) abgreifbar ist, und wobei zwischen dem zweiten Niederspannungsanschluss (13b) und dem zweiten Zwischenanschluss eine vierte Summenspannung eines Teils der in Reihe geschalteten Batteriezellmodule (11 a, ..., 11 n) in Abhängigkeit vom Schaltzustand der zweiten (15b) und vierten Schalteinrichtungen (15d) abgreifbar ist. Gemäß einer weiteren Ausführungsform schafft die Erfindung ein Verfahren zum Erzeugen einer Zwischenspannung in einem erfindungsgemäßen Batteriesystem, mit den Schritten des Ermittelns des Ladezustands der in Reihe geschalteten Batteriezellmodule, des Auswählens einer vorbestimmten Anzahl von Batteriezellmodulen, welche den höchsten Ladezustand aufweisen, und des Ansteuerns der ersten und zweiten Schalteinrichtungen der Schaltmatrix, so dass zwischen dem ersten und dem zweiten Niederspannungsanschluss eine Summenspannung der ausgewählten Batteriezellmodule in Abhängigkeit vom Schaltzustand der ersten und zweiten Schalteinrichtungen abgreifbar ist.

### Vorteile der Erfindung

Eine grundlegende Idee der Erfindung ist es, die Leistungsfähigkeit eines in Serienschaltung aus Einzelzellen aufgebauten elektrischen Energiespeichers zu erhöhen, indem eine optimale Auslastung jeder einzelnen Batteriezelle erreicht wird. Es wird daher eine Schaltmatrix verwendet, welche über eine Vielzahl von Schalteinrichtung selektiv eine Gruppe von Batteriezellen in Abhängigkeit von ihrem Ladezustand auswählen kann, um mit der Gruppe von Batteriezellen eine Zwischenspannung, insbesondere zum Bereitstellen einer Bordnetzspannung oder einer Versorgungsspannung für Steuergeräte des elektrischen Energiespeichers, zu erzeugen. Dadurch ergeben sich zwei wesentliche Vorteile: Zum Einen wird der Alterungsprozess der Einzelzellen durch gleichmäßige Belastung der Batteriezellen verlangsamt, da immer nur die momentan stärksten Batteriezellen zur Erzeugung der Zwischenspannung herangezogen werden. Zum Anderen kann dadurch auf eine Sekundärbatterie verzichtet werden, da mit einem einzigen Energiespeicher zwei verschiedene Ausgangsspannungen erzeugt werden können.

Ein derartig aufgebauter Energiespeicher bietet somit eine höhere Leistungsfähigkeit aufgrund verlangsamter Alterung, gleichmäßiger Zellbelastung und geringerer Abhängigkeit von Fertigungstoleranzen. Vorteilhafterweise kann ein Erkennen der Ladezustände der Batteriezellmodule mit Ladeüberwachungseinrichtungen erfolgen, die in herkömmlichen Lithium-Ionen-Akkumulatoren üblicherweise bereits vorhanden sind. Gegebenenfalls können weitere abgeleitete Größen aus dem Batteriemanagement zur Bestimmung des Gesundheitszustands (SOH, "state of health") der Batteriezellmodule herangezogen werden.

Vorteilhafterweise können weitere Schalteinrichtungen vorgesehen sein, welche dazu ausgelegt sind, je eine der Schaltschienen mit ersten und zweiten Zwischenanschlüssen der Schaltmatrix zu verbinden, wobei zwischen den Niederspannungsanschlüssen und jeweils einem der Zwischenanschlüsse Teilspannung anliegen, welche über eine Reihenschaltung zu einer Summenspannung addiert werden können. Dadurch kann die Zwischenspannung variabel gestaltet werden, je nachdem, wie viele der Batteriezellmodule zur Erzeugung der Zwischenspannung herangezogen werden.

Vorteilhafterweise kann das Batteriesystem mit Gleichspannungswandlern ausgestattet werden, die jeweils die Zwischenspannung wandeln können. Dadurch ergibt sich der Vorteil, dass das Bordnetz, welche mit der Zwischenspannung versorgt wird, galvanisch von dem Hochspannungsnetz getrennt werden kann.

Gemäß einer vorteilhaften Ausführungsform kann das Batteriesystem eine Vielzahl von Verbindungseinrichtungen mit einer Reihenschaltung aus einem ohmschen Widerstand und einem Schalter aufweisen, so dass durch Schließen der Schalter einzelne Batteriezellmodule selektiv über den ohmschen Widerstand teilentladen bzw. teilweise belastet werden können. Dadurch kann eine feinere Abstimmung des Ladezustandsausgleichs erfolgen.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Batteriesystems gemäß einer Ausführungsform der Erfindung;
- Fig. 2: eine schematische Darstellung eines Batteriesystems gemäß einer weiteren Ausführungsform der Erfindung; und
- Fig. 3: eine schematische Darstellung eines Verfahrens zum Erzeugen einer Zwischenspannung in einem Batteriesystem gemäß einer weiteren Ausführungsform der Erfindung.

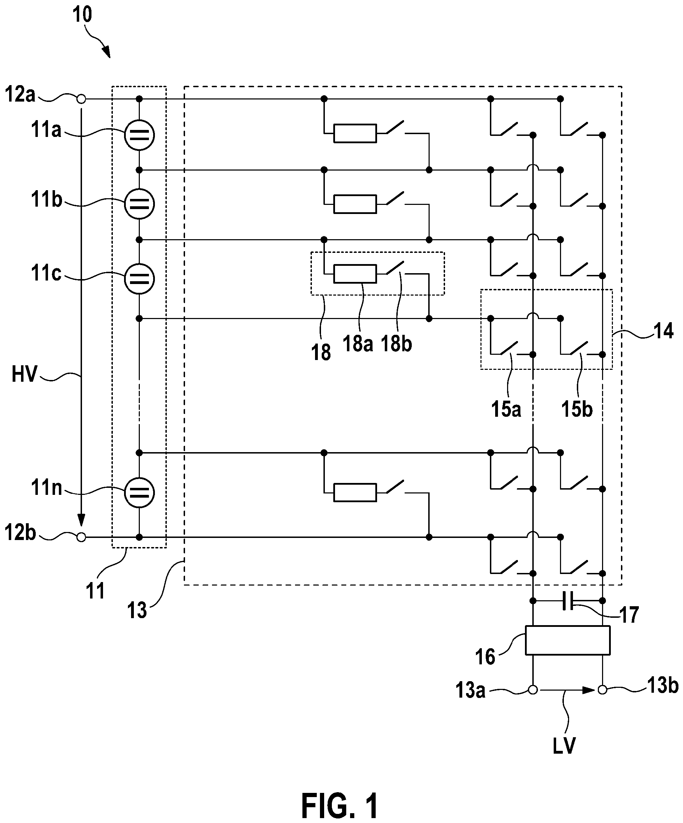

Fig. 1 zeigt eine schematische Darstellung eines Batteriesystems 10 mit einem Batteriemodul 11 und einer Schaltmatrix 13. Das Batteriemodul 11 weist dabei eine Vielzahl von in Serie geschalteten Batteriezellmodulen 11a, 11b, 11c, ..., 11n auf. Die Batteriezellmodule 11a, 11b, 11c, ..., 11n können beispielsweise Lithium-Ionen-Akkumulatoren sein. Das Batteriemodul 11 weist zwei Hochspannungsanschlüsse 12a, 12b auf, an welchen eine Ausgangsspannung HV, beispielsweise eine Traktionsspannung des Batteriesystems 10 anliegt. Die Ausgangsspannung HV kann beispielsweise eine Hochspannung sein und mehrere hundert Volt betragen.

Die Schaltmatrix umfasst eine Vielzahl von Schaltschienen 14, welche jeweils mit Knotenpunkten zwischen zwei Batteriezellmodulen 11a, 11b, 11c, ..., 11n verbunden sind. Weitere Schaltschienen 14 sind mit den Hochspannungsanschlüssen 12a, 12b des Batteriemoduls 11 verbunden. Aus Gründen der Übersichtlichkeit ist jeweils nur eine Schaltschiene 14 in Fig. 1 mit Bezugszeichen versehen. Die Schaltschienen 14 sind jeweils über erste Schalteinrichtungen 15a mit einem ersten Niederspannungsanschluss 13a der Schaltmatrix 13 und über zweite Schalteinrichtung 15b mit einem zweiten Niederspannungsanschluss 13b der Schaltmatrix 13 schaltbar verbunden. Die ersten und zweiten Schalteinrichtungen 15a, 15b können beispielsweise Halbleiterschalter, zum Beispiel IGBT- oder MOSFET-Schalter umfassen.

Zum Erzeugen einer Zwischenspannung LV zwischen den Niederspannungsanschlüssen 13a und 13b können jeweils eine der ersten Schalteinrichtungen 15a und eine der zweiten Schalteinrichtungen 15b geschlossen werden, so dass eine oder mehrere der Batteriezellmodule 11a, 11b, 11c, ..., 11n zwischen die Niederspannungsanschlüsse 13a und 13b geschaltet werden. Mit der Schaltmatrix 13 nach Fig. 1 können jeweils nur benachbarte Batteriezellmodule 11a, 11b, 11c, ..., 11n zwischen die Niederspannungsanschlüsse 13a und 13b geschaltet werden. Es kann dabei eine vorbestimmte Anzahl von benachbarten Batteriezellmodulen 11a, 11b, 11c, ..., 11n ausgewählt werden, welche zur Erzeugung der Zwischenspannung LV herangezogen werden. Beispielsweise können die Batteriezellmodule 11a, 11b, 11c, ..., 11n jeweils eine Einzelspannung von 4 Volt bereitstellen und die vorbestimmte Anzahl kann drei betragen. Auf diese Weise kann eine Zwischenspannung LV von 3 x 4 Volt = 12 Volt an den Niederspannungsanschlüssen 13a und 13b abgegriffen werden. Selbstverständlich ist es ebenso möglich, jede andere Anzahl von benachbarten die Batteriezellmodulen 11a, 11b, 11c, ..., 11n zur Erzeugung der Zwischenspannung LV heranzuziehen.

In Abhängigkeit von der vorbestimmten Anzahl kann es möglich sein, einen Teil der Vielzahl ersten bzw. zweiten Schalteinrichtungen 15a und 15b aus Effizienzgründen wegzulassen. Beispielsweise können die zweiten Schalteinrichtungen 15b der in Fig. 1 oberen drei Schaltschienen 14 und die ersten Schalteinrichtungen 15a der in Fig. 1 unteren drei Schaltschienen 14 nicht ausgestaltet werden, wenn stets drei benachbarte Batteriezellmodulen 11a, 11b, 11c, ..., 11n zur Erzeugung der Zwischenspannung LV herangezogen werden.

Das Batteriesystem 10 kann weiterhin einen Gleichspannungszwischenkreis mit einem Kondensator 17 aufweisen, welcher zwischen den ersten Niederspannungsanschluss 13a und den zweiten Niederspannungsanschluss 13b der Schaltmatrix 13 gekoppelt ist. Überdies kann ein Gleichspannungswandler 16 vorgesehen sein, welche die Zwischenspannung LV wandelt. Dabei kann der Gleichspannungswandler 16 ein Wandlungsverhältnis von 1:1 aufweisen, so dass er lediglich zur galvanischen Entkopplung des Zwischenspannungskreises, beispielsweise des Bordnetzes eines elektrisch betriebenen Fahrzeugs dient. Es kann jedoch auch vorgesehen sein, keinen Gleichspannungswandler 16 vorzusehen, um das Batteriesystem 10 zu vereinfachen und beispielsweise für Mobilitätsanwendungen im Gewicht zu optimieren.

Das Batteriesystem 10 kann Verbindungseinrichtungen 18 aufweisen, welche jeweils zwei benachbarte Schaltschienen 14 über eine Reihenschaltung eines ohmschen Widerstands 18a und eines Schalters 18b überbrücken können. Dadurch können die Batteriezellmodule 11a, 11b, 11c, ..., 11n nur teilweise belastet werden, indem der zugehörige Schalter 18b geschlossen wird, und ein Teil des Stroms statt durch das entsprechende Batteriezellmodul 11a, 11b, 11c, ..., 11n über den ohmschen Widerstand 18a fließt. Der ohmsche Widerstand 18a kann hierzu insbesondere ein hochohmiger Widerstand sein.

Die Zwischenspannung LV, welche an den Niederspannungsanschlüssen 13a und 13b bereitgestellt wird, kann beispielsweise zur Versorgung von Steuergeräten des Batteriesystems 10 eingesetzt werden. Es kann jedoch auch möglich sein, eine Niedervoltbatterie mit der Zwischenspannung LV zu laden. Dadurch kann vorteilhafterweise ein Pufferspeicher bereitgestellt werden, über den die einzelnen Batteriezellmodule 11a, 11b, 11c, ..., 11n selektiv geladen werden können. Dazu kann ein Gleichspannungswandler 16 bidirektional ausgeführt werden. Somit könnten während eines Ladevorgangs des Batteriemoduls 11 gezielt die schwächsten Batteriezellmodule mit zusätzlicher Energie aus der Niedervoltbatterie versorgt werden, um Differenzen in der Zellladung auszugleichen.

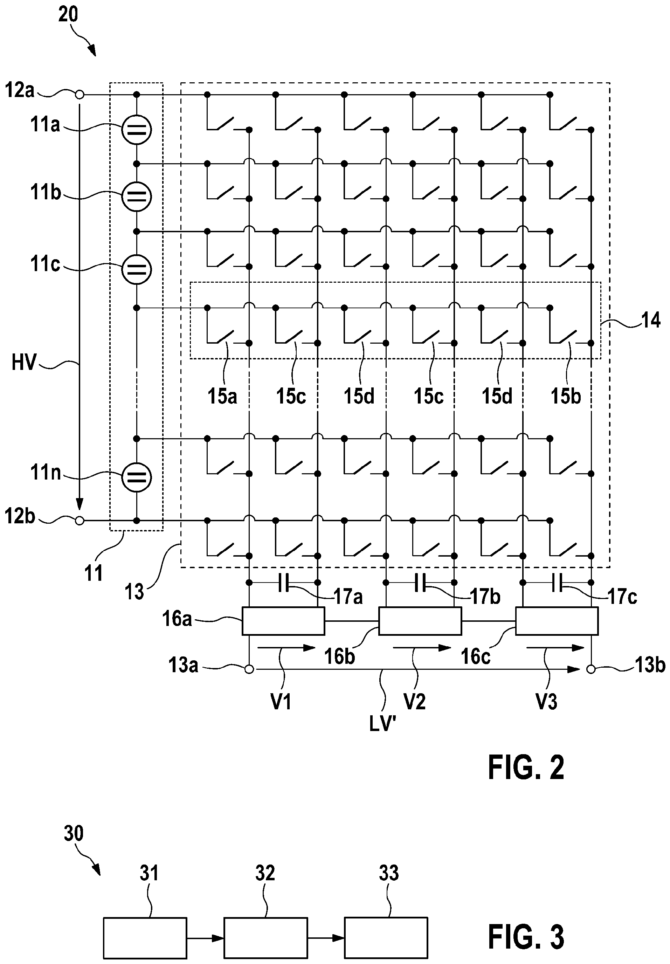

Fig. 2 zeigt eine schematische Darstellung eines Batteriesystems 20. Das Batteriesystem 20 unterscheidet sich von dem in Fig. 1 gezeigten Batteriesystem 10 dadurch, dass eine Vielzahl von dritten und vierten Schalteinrichtungen 15c bzw. 15d vorgesehen sind, welche jeweils eine der Schaltschienen 14 mit Zwischenanschlüssen der Schaltmatrix 13 verbinden können. Das Batteriesystem 20 kann mehrere Gleichspannungswandler 16a, 16b, 16c aufweisen, welche jeweils zwischen Niederspannungsanschlüsse und Zwischenanschlüsse der Schaltmatrix geschaltet sind, und deren Ausgangsanschlüsse in einer Reihenschaltung verschaltet sind, so dass an den Niederspannungsanschlüssen 13a und 13b eine Zwischenspannung LV' abgreifbar ist, die eine Summenspannung der Ausgangsspannungen V1, V2, V3 der jeweiligen Gleichspannungswandler 16a, 16b, 16c darstellt.

Mithilfe der zusätzlichen Schalteinrichtungen 15c, 15d können in dem Batteriesystem 20 gezielt einzelne, auch nicht benachbarte Batteriezellmodule 11a, 11b, 11c, ..., 11n ausgewählt werden, welche zur Erzeugung der Zwischenspannung LV' herangezogen werden. Beispielsweise können die drei Batteriezellmodule 11a, 11b, 11c, ..., 11n mit dem stärksten Ladezustand ermittelt werden, und die Schalteinrichtungen 15a, 15b, 15c, 15d entsprechend angesteuert werden, so dass jedes der drei ausgewählten Batteriezellmodule 11a, 11b, 11c, ..., 11n einen Gleichspannungswandler 16a, 16b, 16c speist, so dass die Zwischenspannung LV' von der Summe der Einzelspannungen der drei ausgewählten Batteriezellmodule 11a, 11b, 11c, ..., 11n abhängig ist. Beispielsweise kann die Einzelspannung eines Batteriezellmoduls 11a, 11b, 11c, ..., 11n 4 Volt betragen. Wenn die Gleichspannungswandler 16a, 16b, 16c ein Wandlungsverhältnis von 1:1 aufweisen, kann zwischen den Niederspannungsanschlüssen 13a und 13b eine Zwischenspannung LV' von 12 Volt bereitgestellt werden. Es versteht sich, dass die Anzahl der Zwischenanschlüsse bzw. Gleichspannungswandler in Fig. 2 nur beispielhafter Natur ist, und dass es ebenso möglich ist, mehr oder weniger Zwischenanschlüsse bzw. Gleichspannungswandler in dem Batteriesystem 20 vorzusehen.

Ebenso können zwischen die Niederspannungsanschlüsse und die Zwischenanschlüsse jeweils Gleichspannungszwischenkreise mit Kondensatoren 17a, 17b und 17c gekoppelt werden.

Fig. 3 zeigt eine schematische Darstellung eines Verfahrens 30 zum Erzeugen einer Zwischenspannung in einem Batteriesystem, insbesondere in einem Batteriesystem 10 oder 20 gemäß einer der Fig. 1 und 2. In einem ersten Schritt 31 erfolgt ein Ermitteln des Ladezustands der in Reihe geschalteten Batteriezellmodule 11a, 11b, 11c, ..., 11n des Batteriemoduls 11. In einem zweiten Schritt 32 erfolgt ein Auswählen einer vorbestimmten Anzahl von Batteriezellmodulen 11a, 11b, 11c, ..., 11n, welche den höchsten Ladezustand aufweisen. In einem dritten Schritt 33 erfolgt dann ein Ansteuern der ersten und zweiten Schalteinrichtungen 15a, 15b der Schaltmatrix 13, so dass zwischen dem ersten und dem zweiten Niederspannungsanschluss 13a, 13b eine Summenspannung der ausgewählten Batteriezellmodule 11a, 11b, 11c, ..., 11n in Abhängigkeit vom Schaltzustand der ersten und zweiten Schalteinrichtungen 15a, 15b abgreifbar ist.

Mit dem Verfahren 30 können gezielt die Batteriezellmodule 11a, 11b, 11c, ..., 11n mit dem aktuell stärksten Ladezustand zur Erzeugung der Zwischenspannung bzw. Summenspannung LV ausgewählt werden. Die ausgewählten Batteriezellmodule 11a, 11b, 11c, ..., 11n werden dann gleichzeitig für den Betrieb in der Niederspannungsversorgung und für den Betrieb der Hochspannungsversorgung eingesetzt. Mithilfe von Gleichspannungswandlers kann die Niederspannung auf einen gewünschten Wert eingestellt werden. Es kann vorgesehen sein, den Ladezustand aller Batteriezellmodule 11a, 11b, 11c, ..., 11n laufend zu überwachen, so dass die ausgewählten Batteriezellmodule 11a, 11b, 11c, ..., 11n verändert werden können, falls der Ladezustand der momentan ausgewählten Batteriezellmodule 11a, 11b, 11c, ..., 11n unter den Ladezustand anderer momentan nicht ausgewählter Batteriezellmodule 11a, 11b, 11c, ..., 11n fällt. Hierzu kann ein Schwellwert vorgesehen sein, den die Differenz zwischen den Ladezuständen der Batteriezellmodule 11a, 11b, 11c, ..., 11n überschreiten muss, bevor eine Veränderung der ausgewählten Batteriezellmodule 11a, 11b, 11c, ..., 11n vorgenommen wird, um ein ständiges Schalten der Schalteinrichtungen 15a, 15b zu vermeiden.

Es kann alternativ auch vorgesehen sein, zur Erzeugung der Zwischenspannung LV ein aktives Pulsverfahren einzusetzen, bei dem alle Batteriezellmodule 11a, 11b, 11c, ..., 11n in periodischen Abständen zur Erzeugung der Zwischenspannung herangezogen werden, und wobei die relative Häufigkeit der Aktivierung von dem Ladezustand der jeweiligen Batteriezellmodule 11a, 11b, 11c, ..., 11n abhängt.

## Patentansprüche

1. Batteriesystem (10), mit:
einem Batteriemodul (11), welches einen ersten Hochspannungsanschluss (12a), einen zweiten Hochspannungsanschluss (12b) und eine Vielzahl von zwischen den ersten und zweiten Hochspannungsanschluss in Reihe geschalteten Batteriezellmodulen (11a, ..., 11n) umfasst; und
einer Schaltmatrix (13), welche
eine Vielzahl von Schaltschienen (14), welche jeweils mit einem der Knotenpunkte zwischen je zwei der in Reihe geschalteten Batteriezellmodule (11a, ..., 11n) verbunden sind,
eine Vielzahl von ersten Schalteinrichtungen (15a), welche dazu ausgelegt sind, je eine der Schaltschienen (14) mit einem ersten Niederspannungsanschluss (13a) der Schaltmatrix (13) zu verbinden, und
eine Vielzahl von zweiten Schalteinrichtungen (15b), welche dazu ausgelegt sind, je eine der Schaltschienen (14) mit einem zweiten Niederspannungsanschluss (13b) der Schaltmatrix (13) zu verbinden, umfasst,
wobei zwischen dem ersten (12a) und dem zweiten Hochspannungsanschluss (12b) eine erste Summenspannung (HV) aller in Reihe geschalteter Batteriezellmodule (11a, ..., 11n) anliegt, und
wobei zwischen dem ersten (13a) und dem zweiten Niederspannungsanschluss (13b) eine zweite Summenspannung (LV) eines Teils der in Reihe geschalteten Batteriezellmodule (11a, ..., 11n) in Abhängigkeit vom Schaltzustand der ersten (15a) und zweiten Schalteinrichtungen (15b) abgreifbar ist, wobei die Schaltmatrix (13) weiterhin umfasst:
eine Vielzahl von dritten Schalteinrichtungen (15c), welche dazu ausgelegt sind, je eine der Schaltschienen (14) mit einem ersten Zwischenanschluss der Schaltmatrix (13) zu verbinden, und
eine Vielzahl von vierten Schalteinrichtungen (15d), welche dazu ausgelegt sind, je eine der Schaltschienen (14) mit einem zweiten Zwischenanschluss der Schaltmatrix (13) zu verbinden, wobei zwischen dem ersten Niederspannungsanschluss (13a) und dem ersten Zwischenanschluss eine dritte Summenspannung eines Teils der in Reihe geschalteten Batteriezellmodule (11a, ..., 11n) in Abhängigkeit vom Schaltzustand der ersten (15a) und
dritten Schalteinrichtungen (15c) abgreifbar ist, und
wobei zwischen dem zweiten Niederspannungsanschluss (13b) und dem zweiten Zwischenanschluss eine vierte Summenspannung eines Teils der in Reihe geschalteten Batteriezellmodule (11a, ..., 11n) in Abhängigkeit vom Schaltzustand der zweiten (15b) und
vierten Schalteinrichtungen (15d) abgreifbar ist.

2. Batteriesystem (10) nach Anspruch 1, wobei die Schaltmatrix (13) weiterhin umfasst:
zwei weitere Schaltschienen (14), welche jeweils mit dem ersten (12a) und dem zweiten Hochspannungsanschluss (12b) verbunden sind, und
weitere erste und zweite Schalteinrichtungen (15a, 15b), welche jeweils dazu ausgelegt sind, je eine der zwei weiteren Schaltschienen (14) mit dem ersten Niederspannungsanschluss (13a) oder dem zweiten Niederspannungsanschluss (13b) der Schaltmatrix (13) zu verbinden.

3. Batteriesystem (10) nach Anspruch 1, weiterhin mit:
einem ersten Gleichspannungswandler (16a) mit zwei Eingangsanschlüssen, welche an den ersten Niederspannungsanschluss (13a) und den ersten Zwischenanschluss gekoppelt sind; und
einem zweiten Gleichspannungswandler (16c) mit zwei Eingangsanschlüssen, welche an den zweiten Niederspannungsanschluss (13b) und den zweiten Zwischenanschluss gekoppelt sind,
wobei der erste und der zweite Gleichspannungswandler (16a, 16c) über jeweils erste Ausgangsanschlüsse in Reihe geschaltet sind, so dass zwischen jeweils zweiten Ausgangsanschlüssen des ersten und zweiten Gleichspannungswandlers (16a, 16c) eine spannungsgewandelte Summenspannung (LV') der dritten und vierten Summenspannung abgreifbar ist.

4. Batteriesystem (10) nach Anspruch 3, weiterhin mit:
einem ersten Gleichspannungszwischenkreis mit einem ersten Kondensator (17a), welcher zwischen den ersten Niederspannungsanschluss (13a) und den ersten Zwischenanschluss gekoppelt ist; und
einem zweiten Gleichspannungszwischenkreis mit einem zweiten Kondensator (17c), welcher zwischen den zweiten Niederspannungsanschluss (13b) und den zweiten Zwischenanschluss gekoppelt ist.

5. Batteriesystem (10) nach Anspruch 1, weiterhin mit:
einem Gleichspannungswandler (16) mit zwei Eingangsanschlüssen, welche an die ersten (13a) und zweiten Niederspannungsanschlüsse (13b) gekoppelt sind, und zwei Ausgangsanschlüssen, an welchen eine spannungsgewandelte zweite Summenspannung abgreifbar ist.

6. Batteriesystem (10) nach einem der Ansprüche 1 und 5, weiterhin mit:
einem Gleichspannungszwischenkreis mit einem Kondensator (17), welcher zwischen den ersten (13a) und den zweiten Niederspannungsanschluss (13b) gekoppelt ist.

7. Batteriesystem (10) nach einem der Ansprüche 1 bis 6, weiterhin mit:
einer Vielzahl von Verbindungseinrichtungen (18), welche jeweils eine Reihenschaltung aus einem ohmschen Widerstand (18a) und einem Schalter (18b) aufweisen, und welche zwischen je zwei der Schaltschienen (14) der Schaltmatrix (13) gekoppelt sind.

8. Verfahren (30) zum Erzeugen einer Zwischenspannung (LV) in einem Batteriesystem (10) nach einem der Ansprüche 1 bis 7, mit den Schritten:
Ermitteln des Ladezustands der in Reihe geschalteten Batteriezellmodule (11a, ..., 11n); Auswählen einer vorbestimmten Anzahl von Batteriezellmodulen (11a, ..., 11n), welche den höchsten Ladezustand aufweisen; und
Ansteuern der ersten und zweiten Schalteinrichtungen (15a, 15b) der Schaltmatrix, so dass zwischen dem ersten und dem zweiten Niederspannungsanschluss (13a, 13b) eine Summenspannung (LV) der ausgewählten Batteriezellmodule (11a, ..., 11n) in Abhängigkeit vom Schaltzustand der ersten und zweiten Schalteinrichtungen (15a, 15b) abgreifbar ist.

9. Verfahren (30) nach Anspruch 8, wobei der Ladezustand der ausgewählten Batteriezellmodule (11a, ..., 11n) mit dem Ladezustand der übrigen Batteriezellmodule (11a, ..., 11n) verglichen wird, und wobei die Auswahl der Batteriezellmodule (11a, ..., 11n) verändert wird, sobald der Ladezustand der momentan ausgewählten Batteriezellmodule (11a, ..., 11n) unter den Ladezustand zumindest eines der übrigen Batteriezellmodule (11a, ..., 11n) sinkt.

## Claims

1. Battery system (10), having:
a battery module (11) that comprises a first high voltage connector (12a), a second high voltage connector (12b) and a plurality of battery cell modules (11a, ..., 11n) that are connected in series between the first and second high voltage connector; and
said battery system having a switching matrix (13) that comprises:
a plurality of switching rails (14) that are connected in each case to one of the nodes between in each case two of the battery cell modules (11a, ..., 11n) that are connected in series,
a plurality of first switching devices (15a) that are embodied for the purpose of connecting in each case one of the switching rails (14) to a first low voltage connector (13a) of the switching matrix (13), and
a plurality of second switching devices (15b) that are embodied for the purpose of connecting in each case one of the switching rails (14) to a second low voltage connector (13b) of the switching matrix (13),
wherein a first total voltage (HV) of all series-connected battery cell modules (11a, ..., 11n) is available between the first (12a) and the second high voltage connector (12b), and
wherein a second total voltage (LV) of a part of the series-connected battery cell modules (11a, ..., 11n) can be tapped between the first (13a) and the second low voltage connector (13b) in dependence upon the switching state of the first (15a) and second switching devices (15b), wherein the switching matrix (13) further comprises:
a plurality of third switching devices (15c) that are embodied for the purpose of connecting respectively one of the switching rails (14) to a first intermediate connector of the switching matrix (13), and
a plurality of fourth switching devices (15d) that are embodied for the purpose of connecting respectively one of the switching rails (14) to a second intermediate connector of the switching matrix (13),
wherein a third total voltage of a part of the series-connected battery cell modules (11a, ..., 11n) can be tapped between the first low voltage connector (13a) and the first intermediate connector in dependence upon the switching state of the first (15a) and third switching devices (15c) and wherein a fourth total voltage of a part of the series-connected battery cell modules (11a, ..., 11n) can be tapped between the second low voltage connector (13b) and the second intermediate connector in dependence upon the switching state of the second (15b) and fourth switching devices (15d).

2. Battery system (10) according to Claim 1, wherein the switching matrix (13) further comprises:
two further switching rails (14) that are connected in each case to the first (12a) and the second high voltage connector (12b), and
further first and second switching devices (15a, 15b) that are embodied in each case for the purpose of connecting respectively one of the two further switching rails (14) to the first low voltage connector (13a) or the second low voltage connector (13b) of the switching matrix (13).

3. Battery system (10) according to Claim 1, further having:
a first DC current converter (16a) with two input connectors that are coupled to the first low voltage connector (13a) and the first intermediate connector; and
a second DC current converter (16c) with two input connectors that are coupled to the second low voltage connector (13b) and the second intermediate connector, wherein the first and the second DC current converters (16a, 16c) are connected in series in each case by way of output connectors, so that a current-converted total voltage (LV') of the third and fourth total voltage can be tapped in each case between second output connectors of the first and second DC current converters (16a, 16c)

4. Battery system (10) according to Claim 3, further having:
a first direct current voltage intermediate circuit with a first capacitor (17a) that is coupled between the first low voltage connector (13a) and the first intermediate connector; and
a second direct current voltage intermediate circuit with a second capacitor (17c) that is coupled between the second low voltage connector (13b) and the second intermediate connector.

5. Battery system (10) according to Claim 1, further having:
a DC current converter (16) with two input connectors that are coupled between the first (13a) and second low voltage connectors (13b) as well as having two output connectors at which it is possible to tap a current-converted second total voltage.

6. Battery system (10) according to either one of the Claims 1 and 5, further having:
a direct current voltage intermediate circuit with a capacitor (17) that is coupled between the first (13a) and the second low voltage connector (13b).

7. Battery system (10) according to any one of the Claims 1 to 6, further having:
a plurality of connection devices (18) that in each case comprise a series connection of an ohmic resistor (18a) and a switch (18b), and that are coupled between in each case two of the switching rails (14) of the switching matrix (13).

8. Method (30) for generating an intermediate voltage (LV) in a battery system (10) according to any one of Claims 1 to 7, comprising the steps of:
determining the charge condition of the series-connected battery cell modules (11a, ..., 11n); selecting a predefined number of battery cell modules (11a, ..., 11n), which comprise the highest charge condition; and
controlling the first and second switching devices (15a, 15b) of the switching matrix, in such a manner that a total voltage (LV) of the selected battery cell modules (11a, ..., 11n) can be tapped between the first and second low voltage connector (13a, 13b) in dependence upon the switching state of the first and second switching devices (15a, 15b).

9. Method (30) according to Claim 8, wherein the charge condition of the selected battery cell modules (11a, ..., 11n) is compared to the charge condition of the remaining battery modules (11a, ..., 11n), and wherein the selection of the battery cell modules (11a, ..., 11n) is changed as soon as the charge condition of the currently selected battery cell modules (11a, ..., 11n) falls below the charge condition at least of one of the remaining battery cell modules (11a, ..., 11n).

## Revendications

1. Système d'accumulateurs (10), comportant :
un module d'accumulateurs (11), qui comprend un premier raccordement à haute tension (12a), un deuxième raccordement à haute tension (12b) et une pluralité de modules d'éléments accumulateurs montés en série (11a, ..., 11n) entre les premier et deuxième raccordements à haute tension ; et
une matrice de commutation (13), qui comprend une pluralité de rails de commutation (14) dont chacun est relié par l'un des noeuds entre deux des modules d'éléments accumulateurs montés en série (11a, ..., 11n), une pluralité de premiers dispositifs de commutation (15a) qui sont conçus pour relier respectivement l'un des rails de commutation (14) à un premier raccordement à basse tension (13a) de la matrice de commutation (13), et
une pluralité de deuxièmes dispositifs de commutation (15b) qui sont conçus pour relier respectivement l'un des rails de commutation (14) à un deuxième raccordement à basse tension (13b) de la matrice de commutation (13),
dans lequel il existe entre les premier (12a) et deuxième raccordements à haute tension (12b) une première tension totale (HV) de tous les modules d'éléments accumulateurs montés en série (11a, ..., 11n), et
dans lequel il existe entre les premiers (13a) et deuxièmes raccordements à basse tension (13b) une deuxième tension totale (LV) d'une partie des modules d'éléments accumulateurs montés en série (11a, ..., 11n) en fonction de l'état de commutation des premiers (15a) et deuxièmes dispositifs de commutation (15b), dans lequel la matrice de commutation (13) comprend en outre :
une pluralité de troisièmes dispositifs de commutation (15c), qui sont conçus pour relier respectivement l'un des rails de commutation (14) à un premier raccordement intermédiaire de la matrice de commutation (13), et
une pluralité de quatrièmes dispositifs de commutation (15d), qui sont conçus pour relier respectivement l'un des rails de commutation (14) à un deuxième raccordement intermédiaire de la matrice de commutation (13), dans lequel une troisième tension totale d'une partie des modules d'éléments accumulateurs montés en série (11a, ..., 11n) peut être prélevée entre le premier raccordement à basse tension (13a) et le premier raccordement intermédiaire, en fonction de l'état de commutation des premiers (15a) et troisièmes dispositifs de commutation (15c), et
dans lequel une quatrième tension totale d'une partie des modules d'éléments accumulateurs montés en série (11a, ..., 11n) peut être dérivée entre le deuxième raccordement à basse tension (13b) et le deuxième raccordement intermédiaire en fonction de l'état de commutation des deuxièmes (15b) et quatrièmes dispositifs de commutation (15d).

2. Système d'accumulateurs (10) selon la revendication 1, dans lequel la matrice de commutation (13) comprend en outre :
deux autres rails de commutation (14), qui sont respectivement reliés aux premier (12a) et deuxième raccordements à haute tension (12b), et
d'autres premiers et deuxièmes dispositifs de commutation (15a, 15b), qui sont configurés pour relier respectivement l'un des deux autres rails de commutation (14) au premier raccordement à basse tension (13a) ou au deuxième raccordement à basse tension (13b) de la matrice de commutation (13).

3. Système d'accumulateurs (10) selon la revendication 1, comportant en outre :
un premier convertisseur de tension continue (16a) comportant deux raccords d'entrée, qui sont couplés au premier raccordement à basse tension (13a) et au premier raccordement intermédiaire ; et
un deuxième convertisseur de tension continue (16c) comportant deux raccordements d'entrée, qui sont couplés au deuxième raccordement à basse tension (13b) et au deuxième raccordement intermédiaire,
dans lequel les premier et deuxième convertisseurs de tension continue (16a, 16c) sont respectivement montés en série par l'intermédiaire de premiers raccordements de sortie de manière à ce qu'une tension totale (LV') des troisième et quatrième tensions totales puisse être respectivement prélevée entre des deuxièmes raccordements de sortie des premier et deuxième convertisseurs de tension continue (16a, 16c).

4. Système d'accumulateurs (10) selon la revendication 3, comportant en outre :
un premier circuit intermédiaire à tension continue comportant un premier condensateur (17a), qui est couplé entre le premier raccordement à basse tension (13a) et le premier raccordement intermédiaire ; et
un deuxième circuit intermédiaire à tension continue comportant un deuxième condensateur (17c), qui est couplé entre le deuxième raccordement à basse tension (13b) et le deuxième raccordement intermédiaire.

5. Système d'accumulateurs (10) selon la revendication 1, comportant en outre :
un convertisseur de tension continue (16) comportant deux raccordements d'entrée, qui sont couplés aux premiers (13a) et deuxièmes raccordements à basse tension (13b), et deux raccordements de sortie, au niveau desquels peut être prélevée une deuxième tension totale soumise à une conversion de tension.

6. Système d'accumulateurs (10) selon l'une des revendications 1 et 5, comportant en outre :
un circuit intermédiaire à tension continue comportant un condensateur (17), qui est couplé entre les premier (13a) et deuxième raccordements à basse tension (13b).

7. Système d'accumulateurs (10) selon l'une des revendications 1 à 6, comportant en outre :
une pluralité de dispositifs de connexion (18), qui comportent respectivement un circuit série constitué d'une résistance ohmique (18a) et d'un commutateur (18b), et qui sont respectivement couplés entre deux rails de commutation (14) de la matrice de commutation (13) .

8. Procédé (30) destiné à générer une tension intermédiaire (LV) dans un système d'accumulateurs selon l'une des revendications 1 à 7, comportant les étapes consistant à :
déterminer l'état de charge des modules d'éléments accumulateurs montés en série (11a, ..., 11n) ; sélectionner un nombre prédéterminé de modules d'éléments accumulateurs (11a,..., 11n) qui présentent l'état de charge le plus élevé ; et
commander les premiers et deuxièmes dispositifs de commutation (15a, 15b) de la matrice de commutation de manière à ce qu'une tension totale (LV) des modules d'éléments accumulateurs (11a, ..., 11n) sélectionnés puisse être prélevée entre les premier et deuxième raccordements à basse tension (13a, 13b) en fonction de l'état de commutation des premiers et deuxièmes dispositifs de commutation (15a, 15b).

9. Procédé (30) selon la revendication 8, dans lequel l'état de charge des modules d'éléments accumulateurs (11a, ..., 11n) sélectionnés est comparé à l'état de charge des autres modules d'éléments accumulateurs (11a, ..., 11n), et dans lequel la sélection des modules d'éléments accumulateurs (11a, ..., 11,) est modifiée dès que l'état de charge des modules d'éléments accumulateurs (11a, ..., 11n) actuellement sélectionnés s'abaisse en dessous de l'état de charge d'au moins l'un des autres modules d'éléments accumulateurs (11a, ..., 11n).
